# EUROPÄISCHE PATENTANMELDUNG

(11) **EP 3 783 841 A1**
(43) Veröffentlichungstag der Anmeldung: **24.02.2021**
(21) Anmeldenummer: 20189456.5
(22) Anmeldetag: 04.08.2020
(51) Int. Cl.: H04L 12/28, G01D 4/00, H04Q 9/00

(54) **ZÄHLERNETZ UND BETRIEBSVERFAHREN**

(30) Priorität: 16.08.2019 DE 102019005743
(71) Anmelder: Diehl Metering Systems GmbH, 90451 Nürnberg (DE)
(72) Erfinder: Joppich-Dohlus, Petra, 91080 Rathsberg (DE); Kvesic, Adrian, 90766 Fürth (DE); Schmitz, Stefan, 90455 Nürnberg (DE); Schmidt, Christoph, 90403 Nürnberg (DE); Jambor, Christian, 90449 Nürnberg (DE)
(74) Vertreter: Diehl Patentabteilung

(57) **Zusammenfassung**

Ein Zählernetz (2) enthält eine Zähleranordnung (4) mit Zähler (6) und baulich getrenntem Kommunikationsmodul (12), und eine Gegenstelle (14) für die Zähleranordnung (4) in einem Weitbereichsnetz (16), wobei der Zähler (6) und das Kommunikationsmodul (12) zu einer drahtlosen Nahbereichskommunikation (NB) anhand einer Kommunikationstechnologie (KT) und eines Kommunikationsprotokolls (KP) paarbar sind, wobei das Kommunikationsmodul (12) und die Gegenstelle (14) zu einer Weitbereichskommunikation (WB) anhand einer Netzwerktechnologie (NT) und eines Netzwerkprotokolls (NP) verbindbar sind, wobei das Kommunikationsmodul (12) einen Protokollkonverter (18) zur Umsetzung von Daten (22), die über die Nahbereichskommunikation (NB), das Kommunikationsmodul (12) und die Weitbereichskommunikation (WB) zu kommunizieren sind, zwischen der Kommunikationstechnologie (KT) und der Netzwerktechnologie (NT) und zwischen dem Kommunikationsprotokoll (KP) und dem Netzwerkprotokoll (NP).

Bei einem Verfahren zum Betreiben des Zählernetzes (2) werden Zähler (6) und Kommunikationsmodul (12) gepaart, Kommunikationsmodul (12) und Gegenstelle (14) verbunden, und der Protokollkonverter (18) setzt die Daten (22) zwischen der Nahbereichs-Kommunikationstechnologie (KT) und der Netzwerktechnologie (NT) und zwischen dem Kommunikationsprotokoll (KP) und dem Netzwerkprotokoll (NP) um.

## Beschreibung

Die Erfindung betrifft ein Zählernetz, mit einer Zähleranordnung, enthaltend einen Zähler zur Erfassung einer Verbrauchsgröße eines Verbrauchsmediums und ein Kommunikationsmodul, und mit einer Gegenstelle für die Zähleranordnung in einem Weitbereichsnetz, sowie ein Verfahren zum Betreiben des Zählernetzes.

Eine - insbesondere aus der Praxis - bekannte Zähleranordnung enthält einen Zähler und eine interne oder externe Kommunikationseinheit (Kommunikationsmodul), die zur Kommunikation das MBus(Meter Bus, Feldbus)- oder das wMBus(wireless MBus)-Protokoll verwendet. Daten (z.B. eine vom Zähler erfasste Verbrauchsgröße eines Verbrauchsmediums) werden zu einem Datenkonzentrator geschickt. Dort werden die Applikationsdaten in Paketen über eine Netzwerktechnologie, z.B. 3G, weiter versendet, insbesondere über eine WAN-(wide area network)-Technologie über ein Weitbereichsnetz (WAN), z.B. dem Internet, an die Gegenstelle im WAN.

Aus der DE 10 2016 010 047 A1 ist folgendes bekannt: Wenn zur Funkübermittlung von Datenpaketen eines in ein Smartmetering-Netzwerk eingebundenen Zählers an eine Zentrale die Relaisfunktion eines stationär betriebenen Konzentrators etwa in einer Aufbauphase noch nicht verfügbar ist, werden zur Überbrückung jedenfalls vorübergehend für die Relaisfunktionen Mobileinheiten eingesetzt, die sich in örtlicher Umgebung des Netzwerkes und somit von Zeit zu Zeit auch in der Nähe von dessen einzelnen Zählern bewegen. Als solche Mobileinheiten dienen Personen und/oder Fahrzeuge, die mit Kommunikationsgeräten wie Smartphones für Langstreckenverbindungen im Internet- oder im Mobilfunkstandard ausgerüstet sind. Als modifizierte Mobilfunktelefone sind sie per Hardware oder per Software-App zum Empfang des Datenpaketes von einem Zähler über eine Kurzstreckenverbindung zu derjenigen Mobileinheit ausgelegt, die sich zufällig gerade vorübergehend in der Nähe dieses Zählers aufhält. Die Langstreckenübermittlung des Paketes von der Mobileinheit an die Zentrale kann dann im Internet- oder Mobilfunk-Standard erfolgen.

Aufgabe der vorliegenden Erfindung ist es, Verbesserungen bezüglich eines Zählernetzes vorzuschlagen.

Die Aufgabe wird gelöst durch ein Zählernetz gemäß Patentanspruch 1. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Das Zählernetz enthält eine Zähleranordnung. Die Zähleranordnung enthält einen Zähler. Dieser dient zur Erfassung einer Verbrauchsgröße (z.B. ein Kubikmeterwert) eines Verbrauchsmediums (z.B. Erdgas oder Wasser). Die Zähleranordnung enthält außerdem ein Kommunikationsmodul. Dieses ist insbesondere vom Zähler baulich getrennt. Dies bedeutet, dass beide Komponenten keine gemeinsamen Strukturteile, Systemteile, kein gemeinsames Gehäuse usw. aufweisen. Es handelt sich dann um zwei getrennte Geräte.

Das Zählernetz enthält außerdem eine Gegenstelle für die Zähleranordnung. Die Gegenstelle ist in einem Weitbereichsnetz (WAN, wide area network, z.B. dem Internet) angeordnet.

Der Zähler und das Kommunikationsmodul können zu einer - insbesondere drahtlosen - Nahbereichskommunikation anhand einer Kommunikationstechnologie unter Gebrauch eines Kommunikationsprotokolls gepaart werden. Das Kommunikationsmodul und die Gegenstelle sind zu einer - insbesondere drahtlosen - Weitbereichskommunikation anhand einer Netzwerktechnologie unter Gebrauch eines Netzwerkprotokolls verbindbar.

Nahbereich" bedeutet insbesondere jeweils weniger als 10cm oder 50cm oder 1m oder 5m oder 10m oder 100m oder 1km. "Weitbereich" bedeutet insbesondere jeweils mehr als 10cm oder 50cm oder 1m oder 5m oder 10m oder 100m oder 1km. Die Gegenstelle ist insbesondere ein Kopfende- oder Kopfstellensystem (head-end-system), z.B. ein Portal eines Energieversorgungsunternehmens. Die Verbrauchsgröße bzw. deren Wert ist insbesondere ein Messwert, z.B. ein aktueller Wert bzw. eine Momentaufnahme, wie ein Zählerwert, eine elektrische Momentanleistung, usw. Alternativ ist die Verbrauchsgröße ein Wert für einen Zeitraum, wie z.B. ein Tages- Monats- oder Jahres-Gesamtverbrauch usw.

"Können gepaart werden" bedeutet, dass diese entsprechend "paarbar" bzw. in einem Betriebszustand gepaart sind. "Verbindbar" bedeutet, dass diese in einem Betriebszustand verbunden sind. Die entsprechenden Aussagen gelten sinngemäß auch für nachfolgende Ausführungen.

Im Betrieb sind innerhalb des Zählernetzes Daten zwischen dem Zähler und der Gegenstelle über das Kommunikationsmodul zu kommunizieren. Die Kommunikation verläuft dabei über die Nahbereichskommunikation, das Kommunikationsmodul und die Weitbereichskommunikation bzw. in Gegenrichtung. Zu kommunizierende Daten sind zum Beispiel Werte der Verbrauchsgröße mit zugehörigem Zeitstempel vom Zähler zur Gegenstelle oder Konfigurationsdaten von der Gegenstelle zum Zähler.

Das Kommunikationsmodul enthält einen Protokollkonverter. Dieser ist, z.B. durch Festverdrahtung oder Programmierung, dazu eingerichtet, die Daten zwischen der Nahbereichs-Kommunikationstechnologie und der Netzwerktechnologie umzusetzen. Weiterhin ist der Protokollkonverter dazu eingerichtet, die Daten auch zwischen dem Kommunikationsprotokoll und dem Netzwerkprotokoll umzusetzen.

"Kommunikation" bezieht sich also jeweils auf beide Richtungen, sowohl in Richtung vom Zähler zur Gegenstelle als auch umgekehrt. Die genannten "Technologien" schließen jeweils in Bezug auf das OSI-(Open Systems Interconnection Model)-Sieben-Schichten-Modell wenigstens die physikalische Schicht (Schicht 1), gegebenenfalls auch höhere Schichten, keinesfalls jedoch die Anwendungsschicht (Schicht 7) mit ein. Die genannten "Protokolle" schließen entsprechend wenigstens die Anwendungsschicht, gegebenenfalls auch niedrigere Schichten, keinesfalls jedoch die physikalische Schicht mit ein.

Die Daten werden also im Kommunikationsmodul nicht einfach als bestehende Pakete unverändert weiterversendet, sondern "umgepackt", d.h. die Pakete an sich werden aufgelöst und nur der reine (Nutz-)Inhalt zwischen Technologien und Protokollen umgesetzt. Pakete werden also zumindest geändert.

Die Erfindung bietet den Vorteil, dass die verwendete Netzwerktechnologie bzw. das Netzwerkprotokoll vom Zähler entkoppelt ist. Der Zähler kann so mit verschiedenen Kommunikationsmodulen gepaart werden. Diese können jeweils zwar diejenige Kommunikationstechnologie und dasjenige Kommunikationsprotokoll aufweisen, welches im Zähler implementiert ist, insbesondere also die gleiche bzw. selbe Kommunikationstechnologie / Kommunikationsprotokoll. Die Kommunikationsmodule können sich jedoch hinsichtlich Netzwerktechnologie / Netzwerkprotokoll unterscheiden.

Durch die Anbindung des Zählers an eine entsprechendes Kommunikationsmodul kann ein Zähler relativ schnell für eine Netzwerktechnologie / Netzwerkprotokoll mit zugehörigen Sicherheitsmechanismen verfügbar gemacht werden. In neu aufkommenden Technologien / Protokollen wie zum Beispiel NBIoT (Narrow Band Internet of Things) kann der Zähler somit relativ schnell durch Paarung mit einem Kommunikationsmodul eingebunden werden. Letzteres muss nur entsprechend zur Seite der Gegenstelle hin für die aufkommende Technologie/Protokoll ausgerüstet sein.

Eine neue und aufwändige Zertifizierung des Zählers ist aufgrund der Entkopplung (Zähler vom Kommunikationsmodul, nur Ergänzung/Paarung/Tausch des Kommunikationsmoduls) nicht notwendig.

Durch die (optionale) drahtlose Kopplung (Nahbereichskommunikation, insbesondere Funk-Kopplung) zwischen Zähler und Kommunikationsmodul ist in Bezug auf Ausrüstung / Umrüstung der Netzwerktechnologie / Netzwerkprotokoll kein mechanischer Zugriff auf den Zähler notwendig. Ein Update oder eine Änderung der Netzwerktechnologie / des Netzwerkprotokolls ist vom Zähler entkoppelt. Es ist daher kein Eingriff auf den Zähler notwendig.

In einer bevorzugten Ausführungsform ist der Zähler und/oder das Kommunikationsmodul jeweils für sich batteriebetrieben. So ist zum Beispiel ein Austausch des Kommunikationsmoduls besonders einfach möglich. Dies eignet sich insbesondere für die drahtlose Variante.

In einer bevorzugten Ausführungsform können der Zähler und das Kommunikationsmodul fest und/oder permanent miteinander gepaart werden. Dies bedeutet insbesondere eine "1 zu 1"-Paarung, es ist also kein weiterer Paarungs-Partner beteiligt. Die entsprechende Aussage bezieht sich nicht auf den zeitlichen Aspekt im Sinne einer dauerhaften Paarung ohne Unterbrechung.

In einer bevorzugten Ausführungsform können der Zähler und das Kommunikationsmodul gesichert (z.B. verschlüsselt / ein-eindeutige ausschließliche Zuordnung zweier bestimmter Partner) miteinander gepaart werden. Eine Manipulation der Kommunikation zwischen Zähler und Kommunikationsmodul ist damit verhindert.

In einer bevorzugten Ausführungsform können der Zähler und das Kommunikationsmodul über BLE (Bluetooth low energy) als Kommunikationstechnologie und/oder über MBus (optional auch wMBus) als Kommunikationsprotokoll miteinander gepaart werden. Die Erfindung kann somit unter Verwendung gängiger Nahbereichs-Technologien bzw. Protokolle einfach und kostengünstig umgesetzt werden.

In einer bevorzugten Ausführungsform ist der Zähler zur Übermittlung von Applikationsdaten als Daten über die Nahbereichskommunikation eingerichtet. Gemäß der Erfindung können auch derartige Applikationsdaten hinsichtlich Technologie und Protokoll im Kommunikationsmodul umgesetzt werden.

In einer bevorzugten Ausführungsform sind das Kommunikationsmodul und die Gegenstelle über NBIoT oder LoRaWAN (Long Range WAN) als Netzwerktechnologie und/oder über LwM2M (Lightweight Machine-to-Machine) als Netzwerkprotokoll miteinander verbindbar. Insbesondere zu LoRaWAN sind auch andere entsprechende Netzwerkprotokolle denkbar. In einer bevorzugten Variante dieser Ausführungsform ist dem Netzwerkprotokoll LwM2M eine zugehörige Sicherungsschicht zugeordnet. Diese Sicherungsschicht ist insbesondere DTLS (Datagram Transport Layer Security). Die Erfindung kann somit unter Verwendung gängiger Weitbereichs-Technologien bzw. Protokolle einfach und kostengünstig umgesetzt werden.

In einer bevorzugten Ausführungsform ist der Protokollkonverter dazu eingerichtet, Kommunikationsprotokoll-Daten als Daten zu entschlüsseln, auszuwerten (in der Applikations-Schicht) und in ein Netzwerkprotokoll-Objektmodell umsetzen. Dies gilt auch umgekehrt (Umsetzung von Netzwerkprotokoll zur Kommunikationsprotokoll). Insbesondere werden dabei MBus-Daten in das LwM2M-Objektmodell umgesetzt. Die entsprechende Umsetzung kann so besonders effektiv durchgeführt werden.

Die Aufgabe der Erfindung wird auch gelöst durch ein Verfahren gemäß Patentanspruch 10 zum Betreiben eines erfindungsgemäßen Zählernetzes. Bei dem Verfahren werden der Zähler und das Kommunikationsmodul anhand der Kommunikationstechnologie unter Gebrauch des Kommunikationsprotokolls gepaart, und es werden das Kommunikationsmodul und die Gegenstelle anhand der Netzwerktechnologie unter Gebrauch des Netzwerkprotokolls verbunden. Der Protokollkonverter setzt außerdem die Daten, die zwischen dem Zähler und der Gegenstelle über die Nahbereichskommunikation, das Kommunikationsmodul und die Weitbereichskommunikation kommuniziert werden, sowohl zwischen der Nahbereichs-Kommunikationstechnologie und der Netzwerktechnologie um. Ebenso setzt er die Daten auch zwischen dem Kommunikationsprotokoll und dem Netzwerkprotokoll um.

Das Verfahren und zumindest ein Teil dessen Ausführungsformen sowie die jeweiligen Vorteile wurden sinngemäß bereits im Zusammenhang mit dem erfindungsgemäßen Zählernetz erläutert.

In einer bevorzugten Ausführungsform wird - ausgehend von dem nunmehr "ersten" - Kommunikationsmodul mit der - nunmehr "ersten" - Netzwerktechnologie und dem - nunmehr "ersten" - Netzwerkprotokoll der Zähler vom ersten Kommunikationsmodul getrennt (Paarung) und das erste Kommunikationsmodul wird von der Gegenstelle getrennt (Verbindung). Anschließend wird der Zähler mit einem zweiten Kommunikationsmodul gepaart, das eine von der ersten abweichende zweite Netzwerktechnologie und/oder ein vom ersten abweichendes zweites Netzwerkprotokoll aufweist. Das zweite Kommunikationsmodul und die Gegenstelle werden verbunden. Die Daten werden zwischen dem Zähler und der Gegenstelle über das zweite Kommunikationsmodul kommuniziert und dabei wie oben erläutert - nun jedoch hinsichtlich zweiter Netzwerktechnologie / Netzwerkprotokoll umgesetzt.

So erfolgt eine einfache "Umrüstung" der Zähleranordnung auf eine alternative zweite Netzwerktechnologie / Netzwerkprotokoll.

Die Erfindung beruht auf folgenden Erkenntnissen, Beobachtungen bzw. Überlegungen und weist noch die nachfolgenden Ausführungsformen auf. Die Ausführungsformen werden dabei teils vereinfachend auch "die Erfindung" genannt. Die Ausführungsformen können hierbei auch Teile oder Kombinationen der oben genannten Ausführungsformen enthalten oder diesen entsprechen und/oder gegebenenfalls auch bisher nicht erwähnte Ausführungsformen einschließen.

Die Erfindung beruht insbesondere auf der Idee, dass ein batteriebetriebener Zähler zur Kommunikation von Daten über eine Netzwerktechnologie unter Gebrauch eines Netzwerkprotokolls ein batteriebetriebenes Kommunikationsmodul benutzt. Zähler und Kommunikationsmodul sind insbesondere über BLE-Technologie gesichert miteinander gepaart. Der Zähler verwendet zur Übermittlung der Applikationsdaten insbesondere das MBus-Protokoll über BLE. Im Kommunikationsmodul ist insbesondere die Netzwerktechnologie NBIoT und das LwM2M-Protokoll implementiert. Zur Kommunikation der Daten entschlüsselt das Kommunikationsmodul die-MBus Daten, wertet diese aus und setzt diese in das LwM2M-Objektmodell um. Diese Daten werden dann unter Verwendung des LwM2M-Protokolls und zugehöriger Sicherungsschichten wie z.B. DTLS zum Netzwerk kommuniziert. Entsprechend existiert ein Empfangskanal, der Daten über das Netzwerk empfängt und an den Zähler weiterleitet. Dafür ist im Kommunikationsmodul ein Protokollkonverter vorhanden. Es ist damit auch möglich, Module mit anderen Netzwerktechnologien, wie zum Beispiel LoRa mit entsprechenden Protokollen, zu implementieren.

Gemäß der Erfindung ist insbesondere ein batteriebetriebener Zähler zur Kommunikation von Daten über eine Kommunikationstechnologie unter Gebrauch eines Kommunikationsprotokolls mit einem batteriebetriebenen Kommunikationsmodul gepaart. Insbesondere sind der Zähler und das Kommunikationsmodul über BLE-Technologie gesichert miteinander gepaart. Der Zähler verwendet zur Übermittlung der Applikationsdaten (Daten) insbesondere das MBus Protokoll. Im Kommunikationsmodul ist insbesondere die Netzwerktechnologie NBIoT und das LwM2M-(Netzwerk-/Applikations-)Protokoll implementiert. Zur Kommunikation der Daten entschlüsselt das Kommunikationsmodul die MBus-Daten, wertet diese (in der Applikationsschicht, höchste Schicht des OSI-7-Schichten Modells) aus und setzt diese in das LwM2M-Objektmodell um. Diese Arbeit erledigt insbesondere der Protokollkonverter. Diese Daten werden dann unter Verwendung des LwM2M-Protokolls und zugehöriger Sicherungsschichten wie z.B. DTLS zum Netzwerk (WB-Netz) und einem Server (Gegenstelle) kommuniziert. Es existiert ein entsprechender Empfangskanal für Daten über das Netzwerk. Dafür ist im Kommunikationsmodul ein Protokollkonverter vorhanden. Es ist auch möglich, Module mit anderen Netzwerktechnologien wie z.B. LoRa mit entsprechenden Protokollen zu implementieren. Gemäß der Erfindung wird insbesondere (zur Kommunikation von Daten) ein batteriebetriebener Zähler unter Verwendung eines Standard-Sicherheitsmechanismus (BLE-Security) und einer Standard-Technologie (BLE) bzw. über eine Kommunikationstechnologie unter Gebrauch eines Kommunikationsprotokolls mit einem batteriebetriebenen Kommunikationsmodul (insbesondere permanent) gepaart. Das Kommunikationsmodul gewährleistet die Kommunikation über eine Netzwerktechnologie (z.B. NBIoT oder LoRaWAN) mit geeignetem Protokoll (z.B. LwM2M) zum Server (Gegenstelle). Es findet eine Protokoll-Umsetzung im Kommunikationsmodul (insbesondere im Protokollkonverter) statt, d.h. alle Schichten (im OSI-7-Schichten-Modell) von physikalische Schicht bis Applikations-Schicht sind betroffen. Das Kommunikationsmodul setzt also die Kommunikation zwischen Zähler und Kommunikationsmodul in das Netzwerkprotokoll (und insbesondere Netzwerktechnologie) um.

Gemäß der Erfindung ergibt sich somit ein Protokollkonverter im batteriebetriebenen Kommunikationsmodul.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen, jeweils in einer schematischen Prinzipskizze:

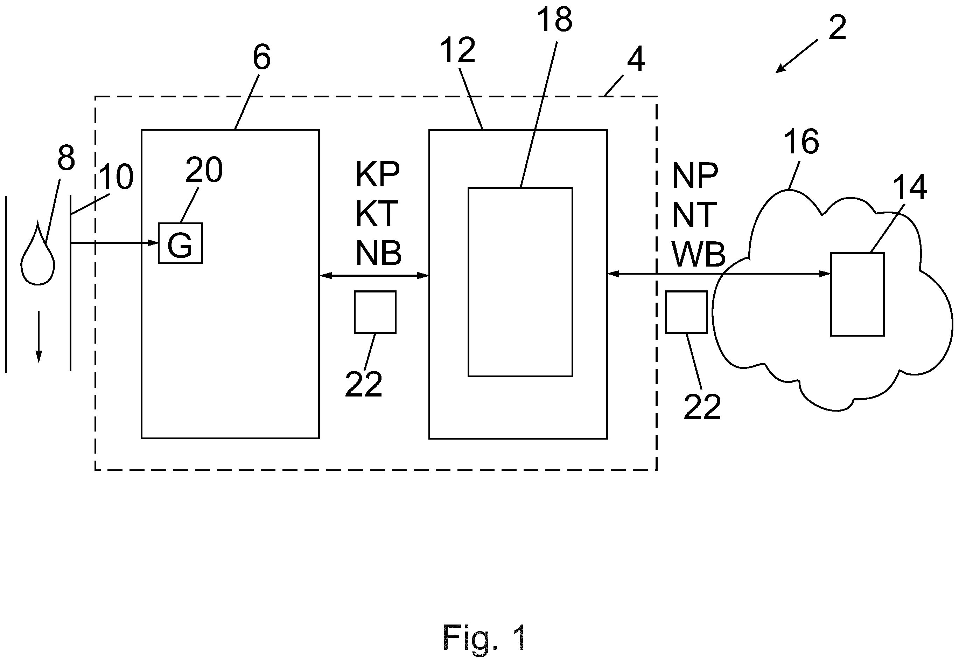

- Figur 1: ein erfindungsgemäßes Zählernetz in einem schematischen Blockschaltbild.

Figur 1 zeigt in einem schematischen Blockschaltbild ein Zählernetz 2. Dieses enthält eine Zähleranordnung 4. Letztere enthält einen Zähler 6, der zur Erfassung einer Verbrauchsgröße G, hier einem Zählerstand in Kubikmeter, eines Verbrauchsmediums 8, hier Leitungswasser, das durch ein Wasserrohr 10 fließt, dient.

Die Zähleranordnung 4 enthält außerdem ein Kommunikationsmodul 12, das vom Zähler 6 baulich getrennt ist. Sowohl der Zähler 6 als auch das Kommunikationsmodul 12 können zu ihrem jeweiligen Außenraum hin, also "extern" miteinander kommunizieren, was durch einen Doppelpfeil angedeutet ist. Die Kommunikation zwischen beiden ist eine drahtlose Nahbereichskommunikation NB. Hierzu sind Zähler 6 und Kommunikationsmodul 12 anhand einer Kommunikationstechnologie KT (hier BLE) unter Gebrauch eines Kommunikationsprotokolls KP (hier wMBus) fest und permanent und gesichert miteinander gepaart. Dies bedeutet, dass nur diese beiden Partner, und keine dritte Partei an der Nahbereichskommunikation beteiligt sind; der zeitliche Aspekt (dauerhafte Paarung) ist hier nicht angesprochen.

Das Kommunikationsmodul 12 kann extern außerdem eine drahtlose Weitbereichskommunikation WB mit einer Gegenstelle 14 des Zählernetzes 2, hier einem Kopfende(Head-End)-System für den Zähler 6, in einem Weitbereichsnetz 16, hier einem WAN in Form des Internet, durchführen, wiederum angedeutet durch einen Doppelpfeil. Hierzu sind das Kommunikationsmodul 12 und die Gegenstelle 14 anhand einer Netzwerktechnologie NT (hier NBIoT) unter Gebrauch eines Netzwerkprotokolls NP (hier LwM2M mit einer zugeordneten Sicherungsschicht) verbunden.

So findet bei Bedarf für eine Kommunikation zwischen Zähler 6 und Kommunikationsmodul 12 eine Nahbereichskommunikation NB und zwischen Kommunikationsmodul 12 und Gegenstelle 14 eine Weitbereichskommunikation WB statt.

Nahbereichskommunikation NB (einmal täglich für wenige Minuten) und Weitbereichskommunikation WB (einmal täglich für wenige Minuten) finden jeweils nur zu bestimmten Zeiten statt, in den Pausen findet keine Kommunikation zwischen Zähler 6, Kommunikationsmodul 12 und Gegenstelle 14 statt. Nahbereichskommunikation NB und Weitbereichskommunikation WB können, müssen dabei aber nicht gleichzeitig stattfinden.

An der Situation bzw. Anordnung in Figur 1 bzw. dem geschilderten Vorgehen ist weder ein Datenkonzentrator noch ein Gateway beteiligt.

Zähler 4 und Kommunikationsmodul 10 sind jeweils batteriebetrieben, d.h. energietechnisch autark, also nicht extern an einer Energieversorgung angeschlossen.

Das Kommunikationsmodul 12 enthält einen Protokollkonverter 18.

Bei der Erfassung der Verbrauchsgröße G wird zu einem bestimmten vorgebaren Zeitpunkt die aktuelle Verbrauchsgröße G in einen Messwert 20 überführt (also eine konkrete Messung durchgeführt) und mit einem nicht näher erläuterten Zeitstempel versehen. Somit ist bekannt, zu welchem Zeitpunkt die Verbrauchsgröße G welchen Messwert 20 hatte. Das entsprechende Wertepaar (Messwert 20 / Zeitstempel) wird dann in Form von Daten 22 über die Nahbereichskommunikation NB an das Kommunikationsmodul 10 und von dort über die Weitbereichskommunikation WB an die Gegenstelle 14 übermittelt und dort weiterverarbeitet.

Der Protokollkonverter 18 ist zu folgender Vorgehensweise eingerichtet, hier anhand eines Programms in einer entsprechenden nicht dargestellten Recheneinrichtung:
Die Daten 22 sind hier Applikationsdaten einer Applikation (hier ein Zählwerterfassungsprogramm), die im Zähler 6 programmgesteuert abläuft. Diese Daten 22 werden zwischen dem Zähler 6 und der Gegenstelle 14 über die Nahbereichskommunikation NB, das Kommunikationsmodul 12 und die Weitbereichskommunikation WB kommuniziert. Die Daten 22 werden vom Protokollkonverter 18 im Kommunikationsmodul 12 sowohl zwischen der Kommunikationstechnologie KT und der Netzwerktechnologie NT umgesetzt als auch zwischen dem Kommunikationsprotokoll KP und dem Netzwerkprotokoll NP umgesetzt.

Zur Umsetzung (in Richtung vom Zähler 6 zur Gegenstelle 14) werden die Kommunikationsprotokoll(KP)-Daten der Daten 22 entschlüsselt, ausgewertet (in der Applikationsschicht) und in das Netzwerkprotokoll(NP)-Objektmodell umgesetzt. Ebenso erfolgt die Umsetzung von der Kommunikationstechnologie KT in die Netzwerktechnologie NT.

Zu einem späteren Zeitpunkt wird das Weitbereichsnetz 16 hinsichtlich seiner Netzwerktechnologie NT von NBIoT auf LoRaWAN umgestellt. Um den Zähler 6 weiter betreiben zu können, wird die Zähleranordnung 4 umgerüstet. Der Zähler 6 verbleibt hierbei unverändert. Das Kommunikationsmodul 12 wird vom Zähler 6 und von der Gegenstelle 14 getrennt und gegen ein anderes Kommunikationsmodul 12 ausgetauscht, welches mit der Netzwerktechnologie NT LoRaWAN ausgerüstet ist. Das Kommunikationsmodul 12 wird anschließend wieder mit dem Zähler 6 gepaart und der Gegenstelle 14 verbunden. Sodann kann mit der Kommunikation von Daten 22 wie oben beschrieben, nun über die alternative Netzwerktechnologie NT LoRaWAN, fortgefahren werden.

### Bezugszeichenliste

- 2: Zählernetz
- 4: Zähleranordnung
- 6: Zähler
- 8: Verbrauchsmedium
- 10: Wasserrohr
- 12: Kommunikationsmodul
- 14: Gegenstelle
- 16: Weitbereichsnetz
- 18: Protokollkonverter
- 20: Messwert
- 22: Daten

- G: Verbrauchsgröße
- NB: Nahbereichskommunikation
- WB: Weitbereichskommunikation
- KT: Kommunikationstechnologie
- KP: Kommunikationsprotokoll
- NT: Netzwerktechnologie
- NP: Netzwerkprotokoll

## Patentansprüche

1. Zählernetz (2),
- mit einer Zähleranordnung (4), enthaltend
- einen Zähler (6) zur Erfassung einer Verbrauchsgröße (G) eines Verbrauchsmediums (8),
- und ein Kommunikationsmodul (12)
- mit einer Gegenstelle (14) für die Zähleranordnung (4) in einem Weitbereichsnetz (16),
- wobei der Zähler (6) und das Kommunikationsmodul (12) zu einer Nahbereichskommunikation (NB) anhand einer Kommunikationstechnologie (KT) unter Gebrauch eines Kommunikationsprotokolls (KP) gepaart werden können,
- wobei das Kommunikationsmodul (12) und die Gegenstelle (14) zu einer Weitbereichskommunikation (WB) anhand einer Netzwerktechnologie (NT) unter Gebrauch eines Netzwerkprotokolls (NP) verbindbar sind,
- wobei das Kommunikationsmodul (12) einen Protokollkonverter (18) enthält, der dazu eingerichtet ist, Daten (22), die zwischen dem Zähler (6) und der Gegenstelle (14) über die Nahbereichskommunikation (NB), das Kommunikationsmodul (12) und die Weitbereichskommunikation (WB) zu kommunizieren sind, sowohl zwischen der Kommunikationstechnologie (KT) und der Netzwerktechnologie (NT) umzusetzen als auch zwischen dem Kommunikationsprotokoll (KP) und dem Netzwerkprotokoll (NP) umzusetzen.

2. Zählernetz (2) nach Anspruch 1,
**dadurch gekennzeichnet, dass**
der Zähler (6) und/oder das Kommunikationsmodul (12) jeweils für sich batteriebetrieben ist.

3. Zählernetz (2) nach einem der vorhergehenden Ansprüche,
**dadurch gekennzeichnet, dass**
der Zähler (6) und das Kommunikationsmodul (12) fest und/oder permanent miteinander gepaart werden können.

4. Zählernetz (2) nach einem der vorhergehenden Ansprüche,
**dadurch gekennzeichnet, dass**
der Zähler (6) und das Kommunikationsmodul (12) gesichert miteinander gepaart werden können.

5. Zählernetz (2) nach einem der vorhergehenden Ansprüche,
**dadurch gekennzeichnet, dass**
der Zähler (6) und das Kommunikationsmodul (12) über BLE als Kommunikationstechnologie (KT) und/oder über MBus als Kommunikationsprotokoll (KP) miteinander gepaart werden können.

6. Zählernetz (2) nach einem der vorhergehenden Ansprüche,
**dadurch gekennzeichnet, dass**
der Zähler (6) zur Übermittlung von Applikationsdaten als Daten (22) über die Nahbereichskommunikation (NB) eingerichtet ist.

7. Zählernetz (2) nach einem der vorhergehenden Ansprüche,
**dadurch gekennzeichnet, dass**
das Kommunikationsmodul (12) und die Gegenstelle (14) über NBIoT oder LoRaWAN als Netzwerktechnologie (NT) und/oder über LwM2M als Netzwerkprotokoll (NP) miteinander verbindbar sind.

8. Zählernetz (2) nach Anspruch 7,
**dadurch gekennzeichnet, dass**
dem Netzwerkprotokoll (NP) LwM2M eine zugehörige Sicherungsschicht zugeordnet ist.

9. Zählernetz (2) nach einem der vorhergehenden Ansprüche,
**dadurch gekennzeichnet, dass**
der Protokollkonverter (18) dazu eingerichtet ist, Kommunikationsprotokoll-Daten (22) zu entschlüsseln, auszuwerten und in ein Netzwerkprotokoll-Objektmodell umsetzen, und umgekehrt.

10. Verfahren zum Betreiben eines Zählernetzes (2) nach einem der vorhergehenden Ansprüche, bei dem:
- der Zähler (6) und das Kommunikationsmodul (12) anhand der Kommunikationstechnologie (KT) unter Gebrauch des Kommunikationsprotokolls (KP) gepaart werden,
- das Kommunikationsmodul (12) und die Gegenstelle (14) anhand der Netzwerktechnologie (NT) unter Gebrauch des Netzwerkprotokolls (NP) verbunden werden,
- der Protokollkonverter (18) die Daten (22), die zwischen dem Zähler (6) und der Gegenstelle (14) über die Nahbereichskommunikation (NB), das Kommunikationsmodul (12) und die Weitbereichskommunikation (WB) kommuniziert werden, sowohl zwischen der Nahbereichs-Kommunikationstechnologie (KT) und der Netzwerktechnologie (NT) umsetzt als auch zwischen dem Kommunikationsprotokoll (KP) und dem Netzwerkprotokoll (NP) umsetzt.

11. Verfahren nach Anspruch 10,
**dadurch gekennzeichnet, dass**
- ausgehend von dem ersten Kommunikationsmodul (12) mit der ersten Netzwerktechnologie (NT) und dem ersten Netzwerkprotokoll (NP),
- der Zähler (6) vom ersten Kommunikationsmodul (12) getrennt wird und das erste Kommunikationsmodul (12) von der Gegenstelle (14) getrennt wird,
- der Zähler (6) mit einem zweiten Kommunikationsmodul (12) gepaart wird, das eine abweichende zweite Netzwerktechnologie (NT) und/oder ein abweichendes zweites Netzwerkprotokoll (NP) aufweist,
- das zweite Kommunikationsmodul (12) und die Gegenstelle (14) verbunden werden,
- die Daten (22) zwischen dem Zähler (6) und der Gegenstelle (14) über das zweite Kommunikationsmodul (12) kommuniziert werden.
